Europäisches Patentamt

European Patent Office

Office européen des brevets

(11) Publication number: 0 381 373
A1

# EUROPEAN PATENT APPLICATION

(21) Application number: 90300776.3

(22) Date of filing: 25.01.90

(51) Int. Cl.⁵: G01C 9/32

(30) Priority: 31.01.89 GB 8902077

(43) Date of publication of application:
08.08.90 Bulletin 90/32

(84) Designated Contracting States:
AT BE CH DE DK ES FR GB GR IT LI LU NL SE

(71) Applicant: Sheehan, Brendan Thomas
8 Gaynes Park Road
Upminster, Essex RM14 2HH(GB)

(72) Inventor: Sheehan, Brendan Thomas
8 Gaynes Park Road
Upminster, Essex RM14 2HH(GB)

(74) Representative: Eder, Ephry
E. EDER & CO., 39 Cranbrook Road
Ilford, Essex IG1 4PA(GB)

(54) Orientation testing device.

(57) An orientation testing device of the kind known as a "spirit level" (10) which comprises an elongate body (15) having at least one linear edge or planar face (11,12) and, mounted in an aperture (14,16) in the body(15), a closed generally tubular elongate translucent phial (17,18) that is partly filled with liquid to provide a gas (e.g. air) bubble (19,20) which by its position within the elongate phial is indicative of the orientation of the said linear edge or planar face (11,12). The elongate body (15) comprises a chamber (25) housing illumination means (24; 27,28,23,26,29,30) for illuminating the elongate phial.

The provision of the illumination means (24; 27, 28, 23, 26, 29, 30) enables the phial and its gas bubble to be easily seen, especially when used in dark areas, for example in roofed-in partly-built buildings.

## ORIENTATION TESTING DEVICE

This invention relates to orientation testing devices and in particular an orientation testing device of the kind known as a "spirit level" which comprises an elongate body having at least one linear edge or planar face and, mounted in an aperture in the body, a closed generally tubular elongate translucent phial that is partly filled with liquid to provide a gas (e.g. air) bubble which by its position within the elongate phial is indicative of the orientation of the said linear edge or planar face.

A difficulty often encountered with such spirit levels is that the phial and its gas bubble cannot be easily seen, especially when used in dark areas, for example in roofed-in partly-built buildings.

According to one aspect of this invention there is provided an orientation testing device of the said kind wherein the elongate body comprises a chamber housing means for illuminating the elongate phial.

Preferably said illuminating means comprises an electric light bulb, and said chamber includes a compartment to house one or more batteries to supply power to said light bulb.

Advantageously a switch to control said power supply is mounted on the body's exterior surface.

Preferably said chamber is provided within the elongate body and has a closure member which, when in the closed condition, extends contiguously with a surface (preferably a side surface) of the elongate member. The closure member may be removable or be pivotally attached to the said surface.

Advantageously a light diffusing element is interposed between said bulb and said phial.

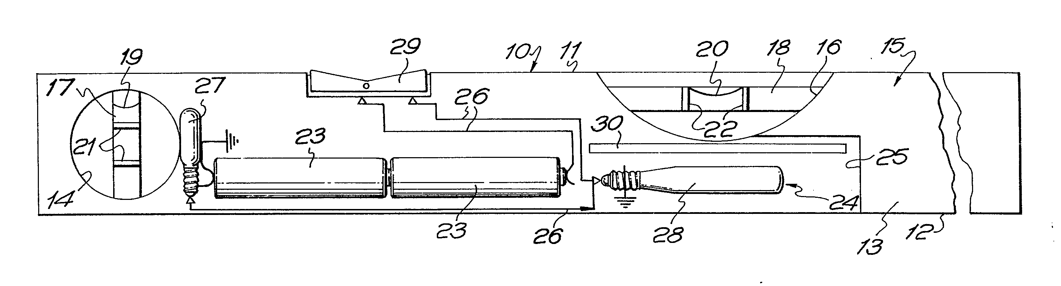

By way of non-limiting example, one embodiment of this invention will now be described with reference to the accompanying drawing which is a generally schematic side elevation of a spirit level according to the invention.

The illustrated orientation testing device 10 is a so-called spirit level and comprises an elongate metal body 15 of generally rectangular section having planar upper and lower parallel faces 11 and 12, and generally parallel front and back side faces 13. The metal body 15 is of the order of 1m in length and is cast to provide apertures 14, 16 therethrough. Aperture 14 is circular and provided adjacent one end of the body 15. Aperture 16 is semi-circular (or other chordal segment) provided in body 15 approximately 30 to 35 cm from aperture 14. Two generally tubular closed phials 17, 18 of glass or other translucent material are mounted to extend across the two apertures 14, 16 respectively, the phial 17 extending at right-angles to the parallel faces 11, 12 and the phial 18 extending parallel to the faces 11, 12. Each of the phials 17, 18 is partly filled with a coloured liquid to provide a bubble of air (or other gas) 19, 20 that will rest centrally of the phial, between a pair of index lines or rings 21, 22 marked on the phial exterior, when that phial is horizontal.

Thus when the spirit level 10 is to be used to test for horizontality, the body 15 is orientated until its faces 11 and 12 are horizontal, this being indicated by the position of bubble 20 centrally of the two lines 22 in phial 18. Similarly, when the spirit level 10 is to be used to test for verticality, the body 15 is orientated until its faces 11 and 12 are vertical, this being indicated by the position of bubble 19 centrally of the two lines 21 in phial 17.

As thus far described the spirit level 10 is of generally conventional form. The features now to be described render the spirit level 10 an exemplary embodiment of the present invention.

To this end, the body 15 is provided with a chamber 25 housing means 24 for illuminating one or each of the elongate phials 17, 18. The chamber 25 has a removable or pivotable closure member (not shown) which, in its closed position, lies contiguously of the side surface 13 of the body 15. The illuminating means 24 comprises an electric light bulb 27, 28 adjacent each phial 17, 18 and electrically connected to one or more dry-cell batteries 23 (located in a compartment of chamber 25) via wires or metal connector strips 26 and an electric rocker switch or slide switch 29. The switch 29 is positioned in the front or rear side 13 although, for convenience of illustration, it is shown positioned in the planar face 11. The arcuate defining walls of the apertures 14, 16 in cast body 15 are provided with windows adjacent the light bulbs 27, 28 so that when the light bulbs are switched on by switch 29 their light output can impinge on the phials 17, 18 and render it easier for the operator to see the bubbles 19, 20. The windows may be covered by either a curved sheet of translucent and/or light diffusing plastics material. Where the curved window cover is only translucent (e.g. transparent) and effects little or no light diffusion, a separate flat sheet 30 of light diffusing plastics material may be interposed between the light bulb(s) and the window(s).

It will be appreciated that the testing device 10 can be readily modified to test for orientations other than horizontal and/or vertical. This can be achieved, for example, by simple re-orientation of one of the phials 17, 18 or by the provision of one or more additional phials at angles other than 0° or 90° to the planar faces 11, 12. It will furthermore be remebered that the switch 29 will be located on an external surface (e.g. a side surface 13) other than the intended alignment surface 11 (as, for convenience, illustrated). Other embodiments of the present invention will be likewise apparent to those skilled in this art, and the invention is not to be deemed limited to the illustrated embodiment alone.

## Claims

1. An orientation testing device of the kind known as a "spirit level" which comprises an elongate body having at least one linear edge or planar face and, mounted in an aperture in the body, a closed generally tubular elongate translucent phial that is partly filled with liquid to provide a gas (e.g. air) bubble which by its position within the elongate phial is indicative of the orientation of the said linear edge or planar face, characterised in that the elongate body (15) comprises a chamber (25) housing illumination means (24; 27,28,23,26,29,30) for illuminating the elongate phial(17,18).

2. An orientation testing device according to Claim 1, characterised in that said illuminating means (24; 27,28,23, 26,29,30) comprises an electric light bulb (27,28), and said chamber (25) includes a compartment to house one or more batteries (23) to supply power to said light bulb (27,28).

3. An orientation testing device according to Claim 2, characterised in that a switch (29) to control said power supply is mounted on an exterior surface (11,13) of the body (15).

4. An orientation testing device according to any preceding Claim, characterised in that said chamber (25) is provided within the elongate body (15) and has a closure member which, when in the closed condition, extends contiguously with an external surface (11,13) of the elongate body(15).

5. An orientation testing device according to any preceding Claim, characterised in that said chamber (25) is provided within the elongate body (15) and has a closure member which, when in the closed condition, extends contiguously with a side surface (13) of the elongate member.

6. An orientation testing device according to Claim 4 or Claim 5, characterised in that the closure member is attached removably and/or pivotally to the said surface (11,13).

7. An orientation testing device according to Claim 2 or to any one of Claims 3 to 6 when dependant from Claim 2, characterised in that a light diffusing element (30) is interposed between said bulb (27,28) and said phial (17,18).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 182 146 (SMITH) <br> * Whole document * | 1-6 | G 01 C 9/32 |
| Y | | 7 | |
| Y | GB-A- 534 813 (EVERIT) <br> * Figures 1,2; page 2, lines 74-105 * | 7 | |
| X | DE-A-2 647 051 (EMMERT) <br> * Whole document * | 1-3 | |
| X | DE-A-2 754 030 (FAASS) <br> * Whole document * | 1-3 | |
| X | DE-A-2 657 688 (NIETERT) <br> * Whole document * | 1-3 | |

TECHNICAL FIELDS SEARCHED (Int. Cl.5)

G 01 C

The present search report has been drawn up for all claims

| Place of search | Date of completion of the search | Examiner |
|---|---|---|
| THE HAGUE | 27-04-1990 | KOLBE W.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)